# EUROPEAN PATENT APPLICATION

(11) **EP 0 822 431 A1**
(43) Date of publication of application: **04.02.1998**
(21) Application number: 96909377.2
(22) Date of filing: 15.04.1996
(51) Int. Cl.: G02B 6/44

(54) **TENSION MEMBER FOR OPTICAL FIBER CABLE, OPTICAL FIBER CABLE USING THE TENSION MEMBER, AND PRODUCTION OF THE TENSION MEMBER**

(30) Priority: 19.04.1995 JP 93486/95; 15.02.1996 JP 27949/96
(71) Applicant: KOMATSU LTD., Minato-ku Tokyo 107 (JP); KOMATSU PLASTICS INDUSTRY CO., Ltd., Tokyo 153 (JP)
(72) Inventor: KIKUCHI, Masao, Technical Inst. of Komatsu Ltd., Hiratsuka-shi, Kanagawa-ken 254 (JP); SOTOOKA, Manabu, Hiratsuka-shi, Kanagawa-ken 254 (JP); SUMITANI, Akira, Hiratsuka-shi, Kanagawa-ken 254 (JP); AKIMOTO, Haruhito, Hiratsuka-shi, Kanagawa-ken 254 (JP); OZAWA, Nobuyuki, Chiba Factory of Komatsu, Ichihara-shi, Chiba-ken 290-01 (JP)
(74) Representative: Fuchs Mehler Weiss
(86) International application number: JP9601034
(87) International publication number: WO9633432

(57) **Abstract**

There is provided a tension member for an optical fiber cable in which the tension member is constituted of a rod (10) that is mainly made up from a fiber reinforced plastic and that is coated and joined with coating layer (2) which is adapted to support an optical fiber (4), characterized in that a fine recess and a fine projection are formed and distributed on a peripheral surface of the said tension member. There is also provided an optical fiber cable which incorporates such tension member therein. There is further provided a method of making such a tension member, which method comprises the steps of: impregnating a bundle of fibers (17) continuously introduced with a thermoset resin; winding a belt (19) having fine recesses and projections randomly and uniformly distributed thereon on a peripheral surface of the said bundle of fibers that has been impregnated with the said thermoset resin; heating and thermally setting the said bundle of fibers on which the said belt has been wounded; and stripping the said belt from the said peripheral surface of the said bundle of fibers that has been thermally set, and in which fine recesses and projections are caused to develop and distribute randomly and yet uniformly on an outer surface of the said rod by continuously repeating the above mentioned steps.

## Description

### TECHNICAL FIELD

The present invention relates to a tension member for imparting to an optical fiber cable a predetermined cable strength and an optical fiber cable which incorporates such a tension member as a component thereof as well as a method of making such a tension member.

### BACKGROUND ART

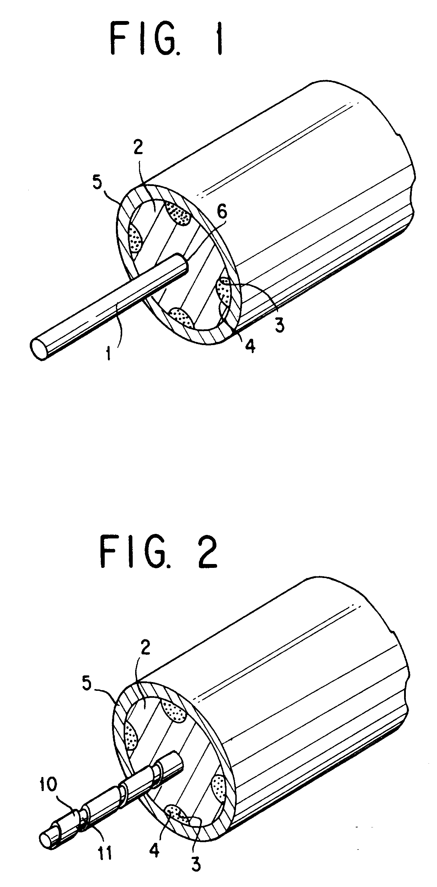

In Fig. 1 of the accompanying drawings hereof, there is shown an example of the cross sectional structure of a typical optical fiber cable that has hitherto been used in the prior art. That structure is constructed of a tension member 1 which is located along an axis thereof, a primary coating layer 2 that is applied onto the periphery of the tension member 1, a plurality of such bundles 4 of optical fibers that are fittedly inserted into a like plurality of grooves 3, respectively, which are formed in a like plurality of regions, respectively, of the peripheral surfaces of the primary coating layer 2 lineally in parallel to its axis or spirally about the latter as a center, and a secondary coating layer 5 that encloses these regions and the peripheral surface of the primary coating layer 2. And, such a tension member 1 is made up of a fiber reinforced plastic rod in which the reinforcing fibers are composed mainly of a glass whereas each of the primary and secondary coating layers 2 and 5 is made up from a plastic material.

By the way, an optical fiber cable of such a general construction, in order for it to have a predetermined cable strength, has naturally made use of a tension member of a preselected thickness and, in addition, has required the tension member 1 and the primary coating layer 2 to be bonded together with a firmness. This has required a prior art optical fiber cable in which a tension member 1 is finished to have a smoothened surface to be preliminarily coated with a bonding agent or adhesive 6 so as to ensure that the said tension member 1 and the said primary coating layer 2 can be joined together with a predetermined strength of joining.

The tension member of this type, however, in which it must be coated with a bonding agent or adhesive 6 in advance, has imposed thereon an excessive material and has a coating equipment cost so that these required ends may be accomplished without fail, and hence a limitation in reducing the overall cost that has incurred in the manufacture thereof.

Then, in order to resolve such an inconvenience and yet to ensure a sufficient strength of joining between the tension member and the primary coating layer, there has hitherto been proposed an arrangement, as disclosed, for example, in Japanese Unexamined Utility Model Publication No. Sho 59-48509, Japanese Unexamined Utility Model Publication No. Sho 63-73710 or Japanese Examined Utility Model Publication No. Hei 03-26570, in which the peripheral surface of a tension member is formed intermittently or continuously at a given spacing with a plurality of recesses or projections so that by applying a primary coating layer directly onto the peripheral surface of the tension member, a strength of joining between these two components may be enhanced.

Also, Japanese Unexamined Patent Publication No. Hei 01 -166012 has set forth a grooved spacer for an optical fiber cable which as in an optical fiber cable of a construction in the prior art as mentioned above, serves to coat a tension member with a primary and a secondary coating layer of a synthetic resin, and has disclosed the formation of the said primary synthetic resin coating layer at a low temperature, which formation causes a recessed and projecting face to be formed in a peripheral surface thereof. This Publication has also disclosed that it is desirable that a synthetic resin material as constituting the said primary synthetic resin coating layer be adopted at the same time, which has an adhesive property such that it may firmly be joined with the said tension member.

It should be noted here that a tension member as disclosed in Japanese Unexamined Utility Model Publication No. Sho 59-48509 mentioned above and a tension member as disclosed in Japanese Utility Model Publication mentioned above are each composed of a metallic wire and are each simply formed on its peripheral surface with a recess and a projection which are simply designed to improve its adhesiveness with a synthetic resin material that constitutes its coating layer. Thus, in their effect, there is no essential difference from the prior art arrangement in which a metallic strand is utilized whose surface is smoothened. On the other hand, it may also be noted that a tension member as disclosed in Japanese Examined Utility Model Publication No. Hei 03-26570 mentioned above in which a fiber reinforced resinous wire is utilized can have an improved adhesiveness with a coating layer and, owing to the fact that it is formed in its peripheral direction with a plurality of recessed or projecting streaks extending in parallel to its longitudinal direction, can at the same time be advantageous in that a twisting deformation may be prevented of the said coating layer arising from a twisting moment which can be produced when cables each coated with a coating layer are twisted together.

If, however, any tension member as disclosed in any of the above mentioned Publications is adopted, it needs to be noted that since the depth of a said recess or the height of a said projection is extremely large and further since the spacing between the adjacent recesses or projections is large and not ignorable, a forming distortion may be created, due to a surface sink and so forth, on the surface of the synthetic resin coating layer which supports a bundle of optical fibers, resulting in a prohibitive influence that can be exerted on the optical properties of an optical fiber cable. It follows, therefore, that there will develop a variety of influences upon communication functions and as a result a plenty of time will need to be consumed for the adjustment and maintenance of these functions. And, even a situation may be brought about in which there is no choice but to discard an optical fiber cable itself so fabricated.

On the other hand, it should be noted that Japanese Unexamined Patent Publication No. Hei 01-166012 mentioned above disclosing a grooved spacer for an optical fiber cable, has illustrated a zinc plated steel wire as an expanding body that constitutes a tension member, and has at the same time set forth an arrangement in which when its peripheral surface is coated with a primary and a secondary coating layer in succession, that is composed of a synthetic resin, so as to fabricate the said grooved spacer, the said primary coating layer will be formed on its peripheral surface with a recessed and projecting face due to a melt fracture by forming the said primary layer at a temperature that is lower than a normal temperature.

It has been found difficult, however, to dimension the recessed and projecting face due to the said melt fracture to an extent such that the same as the grooved spacer for an optical fiber cable may not exert any influence on the functions of the optical fiber cable and may not create a slide thereof. At the same time, if the expanding body is constituted by a metallic wire as mentioned previously, it should be noted that a variety of conditions need to be set other than to allow a forming condition in a peripheral portion thereof to be severely set. There will result, therefore, an increase in the cost of manufacture.

Also, if, for example, a fiber reinforced resin is adopted to constitute the above mentioned expanding body, it should be noted that in order for a recess and a projection to be produced in a size which would not affect the functions of an optical fiber cable, it will not be sufficient simply to set the temperature condition at a low temperature when a primary coating layer is formed. In order to achieve this objective, besides the setting of the forming conditions disclosed in the preceding Publication above, the further setting of other forming conditions including the viscosity, the extruding speed of a resin and so forth will be indispensable. The result will be a further and largely increased cost of the manufacture.

The present invention is made to resolve these problems in the prior art and has its specific object to provide a tension member for an optical fiber cable, and an optical fiber cable incorporating such a tension member as well as a method of making such a tension member whereby especially when a fiber reinforced plastic is employed to constitute the tension member, the said tension member and a coating layer can be firmly joined together without an interposition of any bonding agent or adhesive between them and whereby this joining structure may not adversely affect a function of the optical fiber cable and yet can largely reduce the cost of manufacture.

### SUMMARY OF THE INVENTION

In order to achieve the object mentioned above, a tension member for an optical fiber cable according to the present invention comprises a rod that is mainly composed of a fiber reinforced plastic and is coated and joined with a coating layer which is adapted to support an optical fiber, the said tension member being principally constructed so that a fine recess and a fine projection may be formed and distributed randomly and uniformly over a whole peripheral surface thereof.

According to the above mentioned construction, it can be seen that a tension member for an optical fiber cable of the present invention which is obtained with a stability and a high productivity provides an advantage that a coating layer will be joined with the tension member along a surface thereof on which a fine recess and a fine projection are randomly and yet uniformly distributed over an enlarged area thereof and, as a result, the above mentioned coating layer will firmly be joined with the said tension member with a completeness and without a fear of stripping therefrom by virtue of a frictional force that is developed by the said fine recess and fine projection over the peripheral surface thereof. Accordingly, it can be seen that the force of expansion that is applied on the said coating layer will be transferred without fail to the said tension member. Also, if the said tension member is made up from a material that is soluble with the said peripheral surface, it will be noted that the said tension member and the said coating layer can be welded together and may not be stripped from each other but can be joined together with an increased strength. And, it can be seen that an optical fiber that is supported by the said coating layer around the said tension member which serves as a core material therefor will, by virtue of the fact that a forming configuration may not appear which is due to a surface sink and so forth that are liable to be produced on the surface of the said formed coating layer during its forming stage, be capable of playing its functional characteristic roles as an optical cable at an enhanced precision.

The above mentioned construction may preferably be characterized in that such a recess and a projection as formed on the peripheral surface of the said tension member for an optical fiber cable comprise a winding mark that appears as a result of winding a belt whose surface has a fine projection and a fine recess onto the above mentioned rod in a stage in which it is being formed and thereafter by taking up the said belt from the said rod. Further, according to another form embodying the present invention, such a recess and a projection as formed on the above mentioned peripheral surface comprise those which are produced by air bubbles of a forming layer of a foamable resin added to a synthetic resin that is coated on the peripheral surface of the above mentioned rod or by air bubbles of a foaming layer that is directly coated on the said peripheral surface while in a stage of forming thereof, or alternatively those which are formed by attaching to the said peripheral surface of the rod, while it is being formed, a resinous material that is soluble with the said coating layer which is adapted to support optical fibers as mentioned above that are bundled by pressing. And, in this instance the above mentioned resin material that is soluble with the said coating layer adapted to support the said optical fibers may comprise a fibrous structural body that is made up from a thermoplastic resin, and the said fibrous structural body may typically comprise a structural body that is constituted by a fibrous wire body or a fibrous cloth which may be a woven fabric or an unwoven fabric. Also, in some instances the above mentioned resinous material may be constituted of a grainy resinous pellet. Further, a resinous structural body which comprises a short-fiber mat or an unwoven fabric may be attached onto a whole peripheral surface of a bundle of fibers that is impregnated with a thermoset resin so that it when exposed to the surface of the said rod may provide such a recess and a projection. It should also be noted that the said rod while in a stage of forming thereof may be formed on a said peripheral surface thereof distributively with a fine material that is soluble with a said coating layer which is adapted to support a said optical fiber.

And, an optical fiber cable according to the present invention comprises a core material which constitutes a tension member for the said optical fiber cable and which is constituted of a rod that is mainly made up from a fiber reinforced plastic, that is formed on a peripheral surface thereof with a fine recess and a fine projection and that is coated and joined with a coating material which is made up from a synthetic resin and which is adapted to support an optical fiber.

Also, there is provided in accordance with the present invention, in a first methodical aspect thereof, a method of making a tension member for an optical fiber cable in which the said tension member is constituted of a rod that is mainly made up from a fiber reinforced plastic and that is coated and joined with a coating layer which is adapted to support an optical fiber, which method comprises the steps of:
impregnating a bundle of fibers continuously introduced with a thermoset resin;
winding a belt having fine recesses and projections randomly and uniformly distributed thereon on a peripheral surface of the said bundle of fibers that has been impregnated with the said thermoset resin;
heating and thermally setting the said bundle of fibers on which the said belt has been wounded; and
stripping the said belt from the said peripheral surface of the said bundle of fibers that has been thermally set, and
   in which:
fine recesses and projections are caused to develop and distribute randomly and yet uniformly on an outer surface of the said rod by continuously repeating the above mentioned steps.

There is further provided in accordance with the present invention, in a second methodical aspect thereof, a method of making a tension member for an optical fiber cable in which the said tension member is constituted of a rod that is mainly made up from a fiber reinforced plastic and that is coated and joined with a coating layer which is adapted to support an optical fiber, which method comprises the steps of:
impregnating a bundle of fibers continuously introduced with a thermoset resin;
randomly and uniformly distributing on and attaching to a whole peripheral surface of the said bundle of fibers that has been impregnated with the said thermoset resin, a fine material that is soluble with the said coating layer which is adapted to support the said optical fiber; and
heating and thermally setting the said thermally settable resin that has been impregnated into the said bundle of fibers over the said whole peripheral surface thereof to which the said fine material has been attached, and
   in which:
fine recesses and projections are caused to develop and distribute randomly and yet uniformly on the said whole peripheral surface of the said rod by continuously repeating the above mentioned steps.

It should be noted at this point that the said fine material may comprise a fibrous structural body that is constituted by an unwoven fabric, a woven fabric or the like and that is attached to said whole peripheral surface of said bundle of fibers. Alternatively, the said fine material may comprise a thermoplastic synthetic fibrous material which is of a fineness or woven in a manner that is sufficient to to develop the said fine recesses and projections over the said peripheral surface of the said rod, or a powdery pellet having a size of particles that is sufficient to develop the said fine recesses and projections over the said peripheral surface of the said rod.

There is further provided in accordance with the present invention, in a third methodical aspect thereof, a method of making a tension member for an optical fiber cable in which the said tension member is constituted of a rod that is mainly made up from a fiber reinforced plastic and that is coated and joined with a coating layer which is adapted to support an optical fiber, which method comprises the steps of:
impregnating a bundle of fibers continuously introduced with a thermoset resin;
attaching a fibrous structural body onto a peripheral surface of the said bundle of fibers that has been impregnated with the said thermoset resin; and
heating and thermally setting the said bundle of fibers to which the said fibrous structural body has been attached, and
   in which:
fine recesses and projections are caused to develop and distribute randomly and yet uniformly on the said whole peripheral surface of said rod by continuously repeating the above mentioned steps.

At this point, it should be noted that the said fibrous structural body comprising, e. g., a short-fiber mat or an unwoven fabric, may be attached to the said whole peripheral surface of the said bundle which has been impregnated with the said thermoset resin.

In addition to the above mentioned first to third methods, there is further provided in accordance with the present invention, in a fourth methodical aspect thereof, a method of making a tension member for an optical fiber cable in which the said tension member is constituted of a rod that is mainly made up from a fiber reinforced plastic and that is coated and joined with a coating layer which is adapted to support an optical fiber, which method comprises the steps of:
impregnating a bundle of fibers continuously introduced with a thermoset resin;
heating and thermally setting the said thermally settable resin which has been impregnated into the said bundle of fibers;
coating a peripheral surface of the said bundle of fibers which has been thermally set with a thermally settable resin containing a thermoplastic foamable resin that is soluble with the said coating layer which is adapted to support the said optical fiber; and
foaming the said foamable resin simultaneously while heating and thermally setting the said coated thermally settable resin, and
   in which:
fine recesses and projections are caused to develop and distribute randomly and yet uniformly on the said whole peripheral surface of the said rod by foaming the said foamable resin.

There is further provided in accordance with the present invention, in a fifth methodical aspect thereof, a method of making a tension member for an optical fiber cable in which the said tension member is constituted of a rod that is mainly made up from a fiber reinforced plastic and that is coated and joined with a coating layer which is adapted to support an optical fiber, which method comprises the steps of:
impregnating a bundle of fibers continuously introduced with a thermoset resin;
heating and thermally setting the said thermally settable resin which has been impregnated into the said bundle of fibers;
coating a peripheral surface of the said bundle of fibers which has been thermally set further with a thermally settable resin;
heating and thermally setting the said coated thermoset resin which constitutes the said coating layer; and
forming the said thermally set resin with a fine recess and a fine projection by a mechanical means,
   in which:
fine recesses and projections are caused to develop and distribute randomly and yet uniformly on the said whole peripheral surface of the said rod by using the said mechanical means.

### BRIEF EXPLANATION OF THE DRAWINGS

The present invention will better be understood from the following detailed description and the drawings attached hereto showing certain illustrative embodiments of the present invention. In this connection, it should be noted that such embodiments as illustrated in the accompanying drawings are intended in no way to limit the present invention, but to facilitate an explanation and understanding thereof.

In the accompanying drawings:
Fig. 1 is a perspective view, partially cut away, illustrating an exemplary optical fiber cable in the prior art;
Fig. 2 is a perspective view, partially cut away, illustrating a certain embodiment of the optical fiber cable according to the present invention;
Fig. 3 is a diagrammatic view illustrating the steps in a method of forming a tension member for an optical fiber cable, which constitutes a certain embodiment of the present invention;
Figs. 4A, 4B and 4C are respective front views of different tension members in which recesses and projections are varied in configuration, each embodying the present invention;

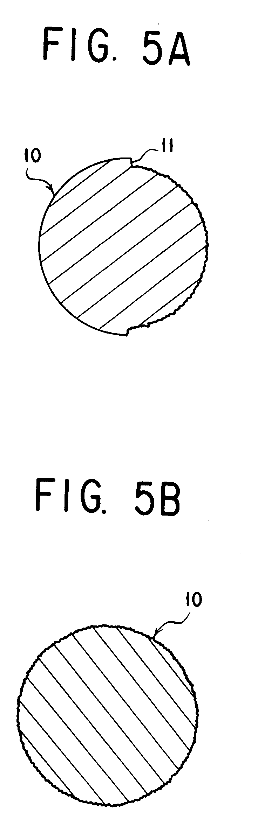

Fig. 5A is an enlarged cross sectional views taken along the line VA-VA of Fig. 4A;
Fig. 5B is an enlarged cross sectional views taken along the line VB-VB of Fig. 4B;
Fig, 6A is a diagrammatic view illustrating another example of the means for forming recesses and projections on the surface of a tension member, which embodies the present invention;
Fig. 6B is an enlarged cross sectional view taken along the line VIB-VIB of Fig. 6A;
Fig. 7 is a diagrammatic view illustrating still another example of the means for forming recesses and projections on the surface of a tension member, which embodies the present invention;
Fig. 8 is a perspective view illustrating a tension member of two layer type in which a fiber braided string is wound on a surface thereof according to the present invention;
Fig. 9 is a perspective view illustrating another tension member of two layer type in which a thermoplastic resin is exposed in a dot like configuration on a surface thereof according to the present invention;
Fig. 10 is a diagrammatic view illustrating the steps in a method of forming a tension member of two layer type, which embodies the present invention;
Fig. 11 is a constructive diagrammatic view schematically illustrating an exemplary' recess and projection forming machine for proving recesses and projections on the surface of a tension member of two layer type, which constitutes an embodiment of the present invention;
Fig. 12 is constructive diagrammatic view schematically illustrating another exemplary recess and projection forming machine for providing recesses and projections on the surface of a tension member of two layer type, which embodies the present invention in a different form; and
Fig. 13 is diagrammatic view schematically illustrating a state in which such machines as illustrated in Fig. 11 or 12 are arranged.

### BEST MODES FOR CARRYING OUT THE INVENTION

Hereinafter, suitable embodiments of the present invention with respect to a tension member for an optical fiber cable and an optical fiber cable which incorporates such a tension member therein as well as a method of making such a tension member will be set forth with reference to the accompanying drawings hereof.

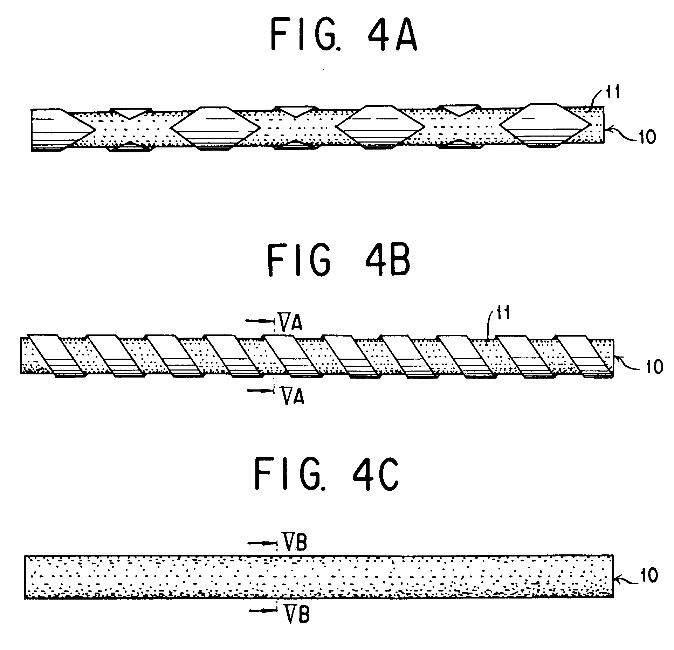

A specific explanation will now be given with respect to certain embodiments of the present invention with reference to the accompanying drawings hereof. It should be noted here that in these specific embodiments of the present invention, same reference numerals as used in Fig. 1 are used to designate same constructive components which are essentially identical to those in an optical fiber cable in the prior art. Also. in the constructive views of tension members as shown in Figs. 2 and 4, whilst a winding mark of a tape width that is formed by winding the tape thereon is shown as expanded as a tape of considerable depth in order to facilitate an understanding thereof, it should be noted that the said winding mark actually has a width such as not to adversely influence the functional characteristics of an optical fiber cable constituted thereof.

Fig, 2 diagrammatically shows the structure of a certain embodiment of the optical fiber cable according to the present invention. A tension member 10 passing through an axis of a primary coating 2 is formed on an external and peripheral surface thereof with a spiral groove 11 of which a bottom surface has a fine recessed and projecting pattern applied thereto. And, the said primary coating layer 2 is made integral with the said tension member 10, without an interposition of any bonding agent or adhesive therebetween, by exercising a direct molding thereof. Their joining in the axial direction has been strengthened by a frictional force possessed by the said spiral groove 11 having the tongued and grooved face on its groove bottom.

The above mentioned tension member 10 is made up from a fiber reinforced plastic (hereinafter referred also to as "FRP") and the said spiral groove 11 formed on its external and peripheral surface represents a taping mark that is produced when a tape as constructed of a woven fabric, an unwoven fabric or the like and having fine recesses and projections on its surface is wound onto a forming rod made up from an unset fiber reinforced plastic while the said tension member 10 is being formed. And, the said fine recessed and projecting pattern that is formed on the bottom surface of the said groove 11 which represents a taping mark as mentioned above does represent a fibrous or woven fibrous mark from the above mentioned woven or unwoven fabric. And, the said taping mark, the said woven fibrous mark and so forth are formed by winding the tape on the above mentioned forming rod, passing the so wound rod through a die having a preselected shape so as to heat and thermally set the same while pressing its peripheral surface, and thereafter stripping the said tape from the then formed rod.

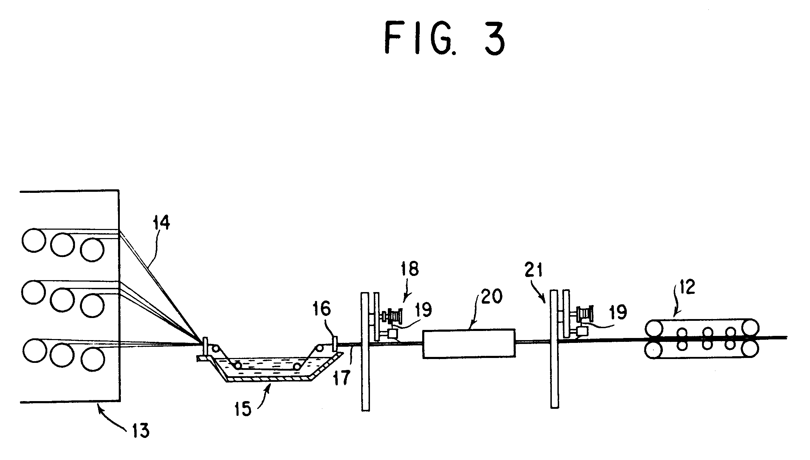

Fig. 3 shows an example of the forming process for the above mentioned tension member 10. In a first step, a multiplicity of reinforcing fibers (e. g., glass fibers made by The Asahi Fiber Glass Co., Ltd at its T-30 roving unit) 14 will be pulled in an alignment and withdrawn under a preselected tension from a roving rack 13 in accordance with a driving action of a rod take-up assembly 12. At this time, a tension which ranges from about 10 to 40 kg will be applied to the said reinforcing fibers 14 from a torque limiter (not shown). These reinforcing fibers 14 may each be an electrically insulating non-alkaline glass fiber, or alternatively an inorganic or organic fiber such as a carbon fiber, aramid fiber or the like.

The said reinforcing fibers 14 which has been pulled in an alignment and withdrawn will then be immersed in an unsaturated polyester resin (e. g., KPR manufactured by Komatsu Plastics Industry, Co., Ltd.) in a resin bath apparatus 15 and the resultant fibers will thereafter be squeezed at a squeezing member 16. The squeezed fibers will then be bound into a bundle of these fibers 17 which is impregnated with an unset matrix resin, the said bundle being then performed in the form of a rod. Subsequently, a tape 19 will be wound spirally on the said bundle of fibers 17 at a tape winding unit 18. The above mentioned matrix resin can, other than the above mentioned unsaturated polyester resin, be also a thermoset resin such as an epoxy resin or a phenol resin, or alternatively a thermo plastic resin such as nylon or polyester.

The winding of the tape 19 at the said tape winding unit 18 will be carried out by feeding the said tape 19 with an angle with respect to the said bundles of fibers 17. This feeding angle will then be set so as to be identical to the angle of winding on the said bundle of fibers 17. If these two angles differ from each other, there will develop a deviation in the pitch of winding, which will in turn give rise to a deformation of the tape 19 being wound. As a result it will follow that an abnormality in the property of a formed product may be brought about and that a continuous formability thereof may be deteriorated.

After the said bundle of fibers 17 on which the said tape 19 has been wound is heated and thermally set in a heating die arrangement 20, the said tape 19 spirally wound on the peripheral surface of said bundle of fibers 17 will be stripped therefrom and taken up onto a tape take-up unit 21. At the same time, the formed rod from which the said tape 19 is stripped will continuously be taken up at a given rate into a rod take-up unit 12. In this manner, it can be seen that an FRP made rod or a tension member 10 will be obtained which represents a formed product as shown Fig. 4A and which has a spiral groove applied thereto that is provided on its bottom surface with a fine recessed and projecting pattern imparted thereto.

The said recessed and projecting pattern that is formed on the bottom surface of the above identified groove 11 can be obtained in a manner such that when the tape 19 comprising a fibrous structural body such as a woven fabric or an unwoven fabric having fine recesses and projections constituted by a fibrous pattern that appears on its surface is wound on the above mentioned bundle of fibers which has been impregnated with a said thermoset resin, a force of pressing that is then applied to the said tape may cause the above identified fibrous pattern of the tape material to be transcribed onto the said groove bottom surface. Accordingly, depending upon the thickness and the texture of a thread or a fabric that constitutes the tape 19, it can be seen that the ratio of areas and heights of the said fine recesses and projections will readily be adjustable. In this connection, it should be noted that the above mentioned tape 19 can, other than a woven fabric or an unwoven fabric, also be such a film of a synthetic resin which is formed on at least one side surface thereof with fine recesses and projections as identified above. It is desirable that such a film be made up of Teflon or any other synthetic resin material which is not wettable with a matrix resin as previously mentioned. If so composed, it will be seen that the film can be used in a number of repetitions.

Whilst in the above identified embodiment an example is shown in which a single spiral groove 11 is provided, it should also be noted here that by constituting each of the said tape winding unit 18 and the said tape take-up unit 21 with a pair of such units of each individual function which are opposed to each other so that a pair of tapes may respectively intersect thereat with a predetermined crossing angle, an alternative arrangement can be provided in which a pair of intersecting spiral grooves 11 may be formed on the peripheral surface of the said formed rod as shown in Fig. 4B.

Also, whilst the said fine recesses and projections which are formed on the peripheral surface of the said tension member 10 may be formed in the configuration of a spiral ring with a given spacing, it should also be noted that by winding a tape 19 with no spacing on a rod being formed or by enclosing the whole peripheral surface of the rod in its longitudinal direction with a tape 19, an alternative arrangement can be provided in which such fine recesses and projections may be formed and distributed randomly and yet uniformly on the whole peripheral surface on the said tension member 10 as shown in Fig. 4C. Moreover, the said rod which are formed over its whole peripheral surface with the said fine recesses and projections may thereafter be formed thereon with a spiral groove or grooves as mentioned previously. In sum, it is only essential that a recessed and projecting pattern be such that an adhesiveness between the said tension member 10 and the said coating layer 2 may be ensured and no deviation may occur between them in their axial direction, permitting any recessed and projectingpattern to be employed which would simply satisfy this end.

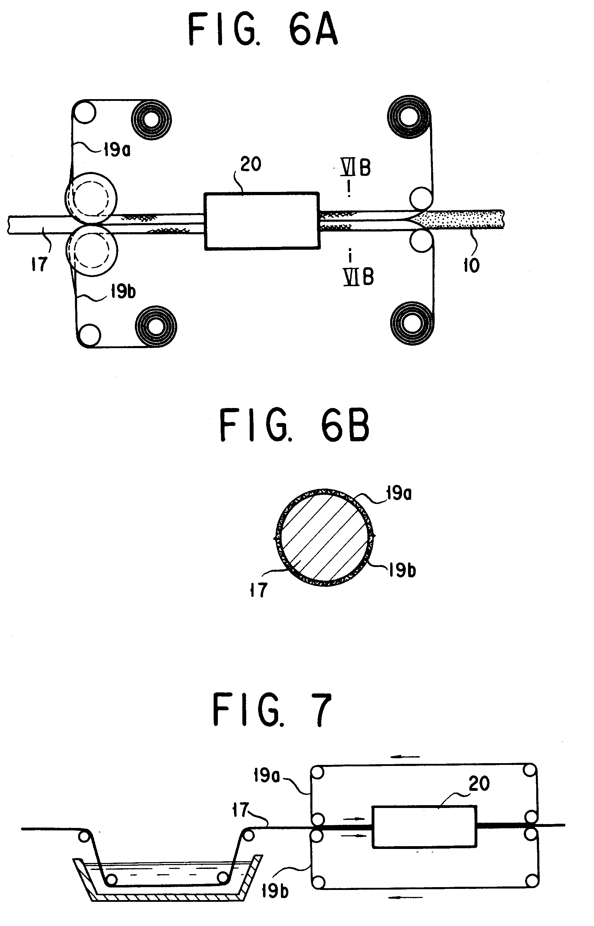

The method of providing a fine recess and a fine projection on a whole peripheral surface of the said tension member 10 by using a tape may, other than as set out in the above mentioned embodiment, also make use of any of those which will be set forth below. In an example as shown in Figs. 6A and 6B, a pair of tapes 19a and 19b each of which is constituted by a fibrous material having a width sized to be one half of the circumferential length of a bundle of fibers 17 are used to wrap the said bundle of fibers 17 along its diametric directions from its both sides, thus each for one half of its peripheral surface, in which state the wrapped bundle of fibers will be heated and thermally set at a heated die unit 20. It follows thereafter that the two tapes 19a and 19b will be stripped from the bundle of fibers to yield an exposed bundle of fibers 10 on which fine recesses and projections are formed as a result of the transcription of the fibrous projections and recesses of the treated tape material. Also, if possible, an alternative arrangement may be provided in which the width of each of the above mentioned tapes will be set to be identical to the circumferential length of the said bundle of fibers 17 and will be used to simultaneously wrap the the whole peripheral surface of the said bundle of fibers 17 therewith. In this case as well, after having been subjected to the heating and thermal setting step, the said treated tapes will be stripped. Accordingly, it will be seen that a winding and a take-up operation in the present invention are intended to signify such a wrapping and a stripping operation, respectively.

Also, in order to enable an above mentioned tape to be repetitively used in providing the said fine recesses and projections, an arrangement may be provided as shown in Fig. 7 in which the above mentioned pair of tapes 19a and 19b will be endlessly disposed up and down so as to pass along the path of travel of the bundle of fibers 17 and in which each of the said tapes 19a and 19b will be rotationally driven intermediate between the upstream and downstream sides of the heated die unit 20 by using a drive means. In this case, it is sufficient that each of the above mentioned tapes in a pair 19a and 19b may each have fine projections and recesses in one such side surface only thereof as to contact with the said bundle of fibers 17, and it is also desirable that the said tapes 19a and 19b, in order to be capable of being used repetitively, should each be made up from a material that is not wettable with a said matrix resin. Furthermore, if the stability of their configuration must be ensured, it should be noted that the above mentioned tapes 19a and 19b may each make use of a shape memory alloy as its composition and so forth.

In practicing the present invention in a manner as in the above mentioned embodiments, note that a said tape 19, 19a, 19b, for the purpose of imparting fine recesses and projections to a peripheral surface of a said tension member 10 of a diameter of 3.5 mm therewith, had a thickness of 0.1 mm and a width of 13 mm. After having been stripped of the tape 19, 19a, 19b, the tension member 10 were formed thereon with fine recesses and projections having a pitch of 1 mm in its longitudinal direction and each having a width of 0.5 mm, a length of 0.5 mm and a depth of 0.05 mm. It has been found that the latter depth represents a dimension that is smaller that the entire thickness of an adhesive layer in the prior art in which the adhesive has been used. With such fine recesses and projections owing to taping marks and a fabric texture or fibers themselves arising from the use of such a tape thickness, it has been found that a formed rod can be used as the said tension member without occurrence of a forming deformation such as a surface sink that was otherwise very likely to be produced on a said coating layer in the stage of forming thereof, without deteriorating the characteristics of optical fibers after they are composed into a cable, and without producing a deviation in its axial direction, and yet with the advantage that an enhanced strength between the said tension member 10 and the said coating layer is assured. In addition, there will also result the advantage that an optical fiber cable if so composed can be made compact.

Means for forming such a fine recess and projection on the above mentioned tension member 10, other than the above mentioned means that are designed to wind and strip the above mentioned tape or tapes, can also include a number of means as will be set forth below.

### [Adhesive Layer Type]

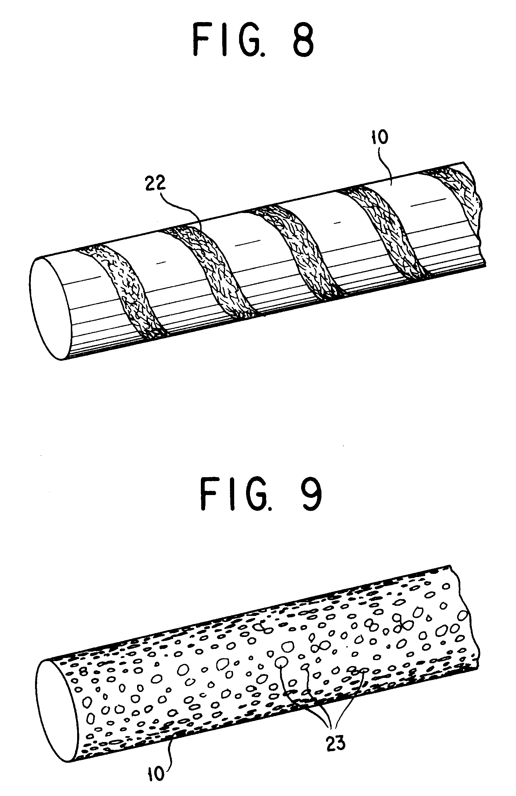

This is a means in which a fibrous string such as a sliver made up from a group of short fibers or a roving made up of multiple filaments, which is composed of a thermo plastic resin, is wound on the surface of a said bundle of fibers 17 which is impregnated with an unset thermally settable matrix resin prior to the thermal setting thereof in the above mentioned heated die arrangement 20 whereafter the bundle of fibers so wound on is extrusion heated at the said heated die arrangement 20. The heating temperature of the said heated die arrangement 20 will then be controlled to such a temperature that the said thermoset matrix resin impregnated into the said bundle of fibers 17 may be set but that the said thermoplastic fibers or filaments wound on the said bundle of fibers 17 may not be melted. This means will cause a portion of the thermo plastic resin constituted by a planar group of fibers 22 to be partially exposed and formed on the peripheral surface of the said tension member 10 integrally therewith as shown in Fig. 8.

The said tension member 10 so formed will then be heated to a temperature at which the finely recessed and projecting portions made by the above mentioned thermo plastic resin (i. e. the group of fibers 22) exposed thereon may brought into a molten state and will thereafter be coated with the above mentioned coating layer 2 that constitutes a supporting member which is adapted to support an optical fiber or fibers. Owing to such a construction, the said tension member 10 and the said coating layer 2 will firmly be joined together via the said thermally set resin. In this case, to make up the above mentioned group of fibers a material is selected which is well soluble (i. e. fusible) with the above mentioned coating layer 2 of an optical fiber film.

In lieu of winding the said group of fibers 22 which is made up of the above mentioned fibrous thermo plastic string on the said bundle of fibers 17 that is impregnated with the said matrix resin, it will be possible to attach, by way of spraying or the like, a mass of powdery pellets each being composed of a thermoplastic resin that is well soluble (i. e. fusible) with the above mentioned coating layer 2 and having a size of particles that is sufficient to form fine recesses and projections on the peripheral surface of the said tension member 10 which has been formed, to the peripheral surface of the said bundle of fibers 17. Further, it should be noted that the above mentioned bundle of fibers 17 that is impregnated with a said matrix resin and on which an unwoven fabric or a glass fiber mat is wounded may be heated and thermally formed. The said unset bundle of fibers 17 at this stage will have been impregnated with a less amount of the said matrix resin. As a consequence, in a case where this bundle of fibers 17 on which an above mentioned unwoven fabric or the like is wounded is heated and thermally formed, it will be seen that this unwoven fabric or the like will be adhered onto the peripheral surface of the said bundle of fibers 17 as the said matrix resin is being set, but this matrix resin will not ooze out up to the surface of the said unwoven fabric or the like. It follows, therefore, that the peripheral surface of the said tension member 10 that has been heated and thermally formed will be covered with an above mentioned unwoven fabric or glass fiber mat and will have fine recesses and projections formed by the above mentioned unwoven fabric or the like, by virtue of which recesses and projections the said tension member 10 and the above mentioned coating layer 2 for an optical fiber cable will be firmly joined.

In connection with the above, it should be noted that the means for partially exposing the thermoplastic resin on the peripheral surface of the said tension member 10 may incorporate a powder that is made up from the said thermoplastic resin into the said matrix resin within the resin bath container 15 previously mentioned.

In this case, it should be noted that the said bundle of fibers 17 which has been impregnated with the said matrix resin will, as it is, be heated and thermally formed at the said heated die arrangement 20 and, in this instance, too, the heating and forming temperature will be set to a temperature such that the said thermoplastic resin may not be melted. The said tension member 10 that has be formed in this manner will have the said thermoplastic resin exposed in a dotted configuration 23 as shown in Fig. 9 and the thermoplastic resin dots 23 will, when the above mentioned coating layer 2 is formed, be melted so as to function as a bonding agent or an adhesive in a recessed and projecting pattern between the said tension member 10 and the said coating layer 2.

### [Two Layer Type]

### [a] Using a Foamable Resin

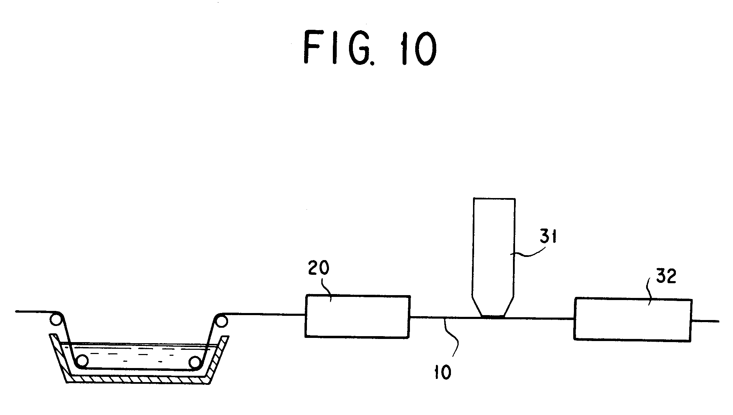

This is a means whereby when a bundle of fibers 17 that has been impregnated with a thermoset matrix resin is heated and thermally set and thereafter is coated with a thermoset resin in an extruding type resin coating machine, a foamable resin will be incorporated into this coating resin, and the resultant resin will be formed on its surface with fine recesses and projections as a result of foaming the said foamable resin while the said coating resin is being set. Fig. 10 shows an example of such a forming process in which a tension member 10 that has been heated and thermally formed will be coated on its peripheral surface with the said thermoset resin which has incorporated the said foamable resin therein at a resin coating arrangement 31 and will thereafter be thermally set again at a posterior thermally setting die unit 32. In this instance, the above mentioned coating thermoset resin had a composition having 100 parts of Ripoxy R804 (a trade mark and manufactured by Showa Highpolymer Co., Ltd.) as its main material and 2 parts of a setting agent, TBPO, to which was added 10 parts of a foamable agent, Vinyhor (a trade mark and manufactured by Eiwa Chemical Industries, Co., Ltd). It was then found that the said tension member 10 which came out from the said posterior thermally setting die unit 32 was formed on its peripheral surface with fine recesses and projections, each having a diameter around approximately 0.01 to 0.2 mm, in a random and yet uniform distribution.

### [b] Using a Mechanical Machining Means

This is a means in which a bundle of fibers 17 that has been impregnated with a thermoset matrix resin is heated and thermally set whereafter a resin that has been thermally set in an extrusion type resin coating machine 32 is coated on the peripheral surface of the said bundle of fibers 17 whereafter the said surface so coated was formed with recesses and projections by mechanical means. The resultant coating layer which does not contributes to the strength of a final formed cable body should properly has a thickness approximately ranging from 0.2 to 0.5 mm. The said mechanical means may be any mechanical means that is capable of cutting the surface of the said coating layer and may, for example, be a lathe, a knurling machine, a water jet machine, a laser machine or the like. Also a shot-peening machine may be used to provide fine recesses and projections by spraying abrasive particles.

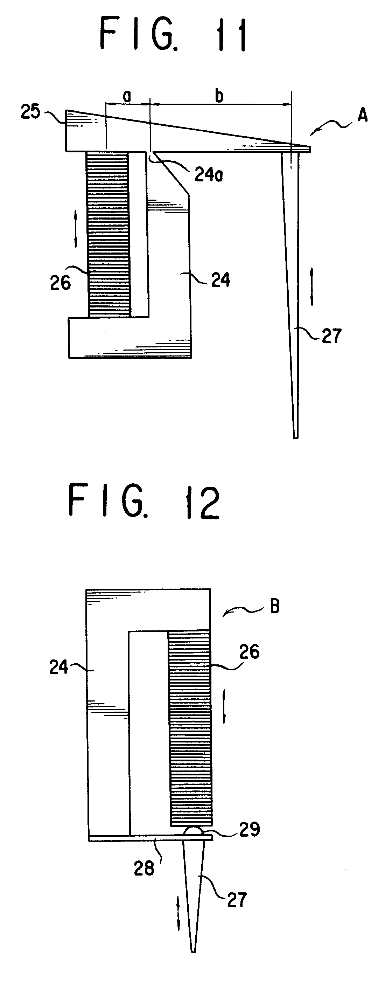

In addition , it should be noted that an above mentioned coating layer may also be formed on its peripheral surface with fine recesses and projections by means of a piezoelectric actuator. A certain method of forming the fine recesses and projections by using the piezoelectric actuator will be set forth below. First of all, it may be seen that the construction of a recess and projection forming machine A that can be used in the said method is diagrammatically shown in Fig. 11. The recess and projection forming machine A as shown makes use of a lever type displacement expanding mechanism and is constructed to include a machine body 24, a lever member 25 that is coupled to the said machine body 24 so that it can be rotated about a fulcrum 24a to a minute extent, a lamination type piezoelectric actuator 26 that is interposed between one side of the said lever member 25 and a portion of the said machine body 24 and that when electrically energized is designed to impart a force of rotation to the said lever member 25 and a needle 27 that is provided to project from the other side of the said lever member 25 towards the direction of the above mentioned rotation.

It will thus be seen that the above mentioned lever member 25 serves as the said displacement expanding mechanism. Thus, assuming that the distance from the said fulcrum 24a to the point of application of the said piezoelectric actuator 24 is a and the distance from the said fulcrum 14a to the said needle 27 is b, there may apply a relationship, for example, a : b = 1 : 25, meaning that if, for example, the said piezoelectric actuator 26 is displaced by 10 µm, the said needle 27 will be displaced by about 0.25 mm. Here it should be noted that the said needle 27 is designed to have its tip with a diameter of 0.2 mm.

On the other hand, there is shown in Fig. 12 a recess and projection forming machine of flight actuator type B having a construction in which a said lamination type actuator 26 stands in an abutting engagement via an armature29 with the base of a said needle 27 that is attached to the tip end portion of a spring 28 which is securely fixed at its one end to a said machine body 24. In the machine of this construction as well, the needle 27 is designed to be displaced by around 0.25 mm when the piezoelectric actuator 26 is electrically energized.

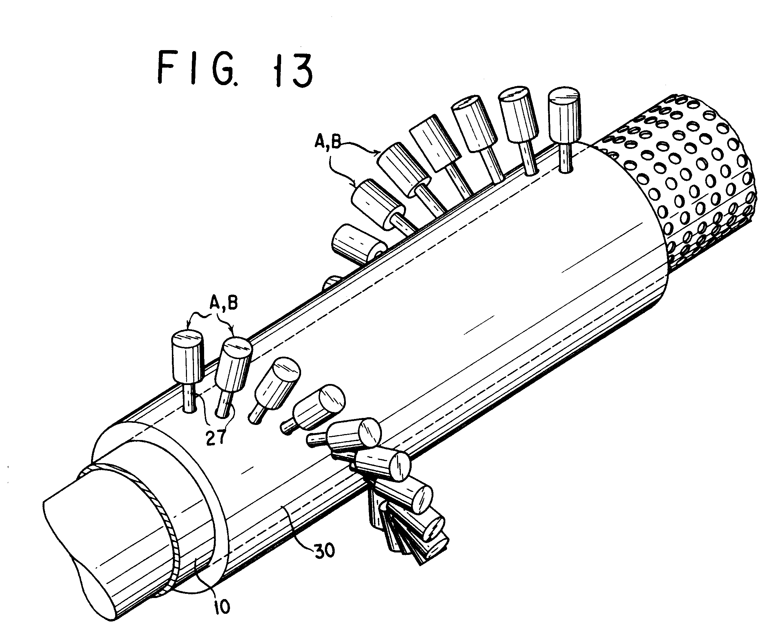

As shown in Fig. 13, a plurality of such recess and projectiong forming machines A or B as mentioned above may be so arranged on the peripheral surface of a tubular body 30, through which a said formed two layer type tension member 10 is passed with no spacing therewith, that they (A or B) in a row may be supported along a spiral path thereon and that their respective needles 27 may be facing corresponding holes which are formed in the said tubular body 30 in such a manner that each of their tips may substantially coincide with the inner peripheral surface of the said tubular body 30. If the recesses and projections which are spaced apart with one another at a distance of 0.2 mm and have a depth of 0.2 mm should be formed on the said tension member 10 having a diameter of 3.5 mm, it will be seen that such plural recess and projection forming machines A or B needs to be arranged at a mutual spacing of 0.2 mm on the outer peripheral surface of the said tubular body 30 around the peripheral surface of the said tension member 10 but it would be difficult to arrange them at such a narrow mutual spacing since the said machine body 24 of each of the said plural recess and projection forming machines A or B is much larger than each of the said needles 27. Since, however, the said recess and projection forming machines A or B are here arranged along a spirally annular path on the said tubular body 30 as mentioned above, it will be seen that they may be disposed thereon at a given narrow mutual spacing. Also, whilst in order for the recesses and the projections to be formed well, an impact that is produced by a said recess and projectionforming machine on a given side on the said tubular body 30 will have to be caught on the opposite side thereon, this will give rise to no problem since the said machines are disposed at such a given narrow mutual spacing as mentioned above.

Now, a certain specific example of the recessed and projecting formation by using a plurality of recess and projection forming machines A or B with a construction as mentioned above will be set forth below.

A tension member 10 having a diameter of 3.5 mm was formed at a rate of forming of 4 m/min whereafter the formed member was passed through a tubular body 30. Then, each piezoelectric actuator 26 was driven at a rate of 167 strokes per a second. As a result, the said tension member 10 that had passed through the said tubular body 30 was formed with fine marks, each having a depth of 0.2 mm and a spacing of 0.2 mm, in an orderly manner.

At this point it should be noted that whilst each of the embodiments mentioned above has exemplarily been shown as having a said tension member 10 that is disposed at a central portion of a said primary coating layer 2, a said tension member 10 may alternatively be disposed at a peripheral region of an optical fiber cable and then attached to the optical fiber cable with a tape or the like. Thus, it should be understood that a tension member according to the present invention can generally be used as a high tensile strength body to reinforce an optical fiber or fibers.

As will be apparent from the foregoing explanation, it will be seen that according to the present invention, a tension member for an optical fiber cable can be firmly joined with a coating layer for supporting an optical fiber without using a bonding agent or adhesive and with fine recesses and projections which are formed on the peripheral surface of the said tension member adversely affecting the said coating layer in a stage of its forming. As a result, not only will a high precision functional characteristic of an optical fiber cable that has been manufactured be ensured here, but also there will ensue a large reduction of its manufacturing cost since the separate step of applying a bonding agent or adhesive as has been essential heretofore in the process of joining such a coating layer and such a tension member together can be dispensed with.

And, it will also be seen that according to the present invention, since the fine recesses and projections which are formed on a tension member for an optical fiber cable can be constructed with a winding mark of a belt, with air bubbles which are produced in its forming stage, or alternatively with a fine material that is attached to the peripheral surface of the body of a tension member integrally therewith, their formation should be highly efficient and be made without fail.

Also, it will be noted that according to the present invention, the depth of the recessed and projecting face can readily be controlled by suitably selecting the configuration of a said belt. Also, if the said belt is made up from a material that can readily be stripped from a resin that makes up a said coating layer, the said belt will repetitively be used. Furthermore, by winding a belt on the whole peripheral surface of a said rod or alternatively covering a said rod along its axial direction with a said belt so as to partially or entirely wind the latter on the former, it will also be seen that the total area which the fine recesses and projections may occupy can readily be adjusted.

Also, according to a feature of the present invention, since a said tension member in its forming stage is eaten on its peripheral surface with a material that is soluble with or adhesive to a said coating layer so as to be made integral therewith or alternatively is joined therewith by winding, it will be seen that the said tension member if used enables the step of spraying a bonding agent or adhesive that has been essential in the prior art for joining such a tension member and such a coating layer together in the process of manufacturing an optical fiber cable to be dispensed with and can well and yet firmly be joined with the said coating layer for supporting an optical fiber, integrally therewith.

Furthermore, according to a method of making a tension member according to the present invention, it will be seen that since the function that enables the tension member to be well and yet firmly joined with a coating layer for supporting an optical fiber can be applied continuously in the essential process of manufacturing such a tension member, a tension member provided with a highly adhesive property for such a coating member adapted to support the optical fiber can be manufactured without particularly complicating the manufacturing process.

While the present invention has hereinbefore been described with respect to certain illustrative embodiments thereof, it will readily be appreciated by a person skilled in the art to be obvious that many alterations thereof, omissions therefrom and additions thereto can be made without departing from the essence and the scope of the present invention. Accordingly, it should be understood that the present invention is not limited to the specific embodiments thereof set out above, but includes all possible embodiments thereof that can be made within the scope with respect to the features specifically set forth in the appended claims and encompasses all equivalents thereof.

## Claims

1. A tension member for an optical fiber cable in which said tension member comprises a rod that is mainly composed of a fiber reinforced plastic and is coated and joined with a coating layer which is adapted to support an optical fiber,
characterized in that:
a fine recess and a fine projection are formed and distributed over a peripheral surface of said tension member.

2. A tension member for an optical fiber cable as set forth in claim 1, characterized in that said fine recess and projection are formed on a bottom surface of a spiral groove that is formed in said peripheral surface.

3. A tension member for an optical fiber cable as set forth in claim 1, characterized in that said fine recess and projection are formed over a totality of said peripheral surface.

4. A tension member for an optical fiber cable as set forth in any one of claims 1 to 3, characterized in that said fine recess and projection comprise a winding mark that appears as a result of winding a belt whose surface has a fine projection and a fine recess onto said rod in a stage in which it is being formed and thereafter taking up said belt from said rod.

5. A tension member for an optical fiber cable as set forth in claim 4, characterized in that said belt is composed of a fibrous structure such as a woven fabric or an unwoven fabric, or a synthetic resin film.

6. A tension member for an optical fiber cable in which said tension member comprises a rod that is mainly composed of a fiber reinforced plastic and is coated and joined with a coating layer which is adapted to support an optical fiber,
characterized in that:
said rod while in a stage of forming thereof is formed on a peripheral surface thereof distributively with a fine material that is soluble with said coating layer which is adapted to support said optical fiber.

7. A tension member for an optical fiber cable as set forth in claim 6, characterized in that said fine material comprises a material that constitutes a fibrous structural body which is composed of a thermoplastic resin.

8. A tension member for an optical fiber cable as set forth in claim 7, characterized in that said fibrous structural body comprises a belt like member that is made up from a fiber.

9. A tension member for an optical fiber cable as set forth in claim 6, characterized in that said fine material comprises a powdery pellet that is made up of thermoplastic resinous particles.

10. A tension member for an optical fiber cable as set forth in claim 1, characterized in that said fine recess and projection comprise those which are formed by foaming a foamable resin that is added to a synthetic resin constituting said coating layer which is applied onto said periphery surface of said rod while in a stage of forming thereof.

11. A tension member for an optical fiber cable as set forth in claim 1, characterized in that said fine recess and projection comprise those which are formed by a mechanical means.

12. A tension member for an optical fiber cable as set forth in claim 1, characterized in that said fine recess and projection comprise those of a surface of a fibrous structural body that is wound on said rod before it is formed by heating and that is exposed to the surface of said rod since while it is formed.

13. An optical fiber cable comprising a core material which constitutes a tension member for said optical fiber cable and which is constituted of a rod that is mainly made up from a fiber reinforced plastic, that is formed on a peripheral surface thereof with a fine recess and a fine projection and that is coated and joined with a coating material which is made up from a synthetic resin and which is adapted to support an optical fiber.

14. A method of making a tension member for an optical fiber cable in which said tension member is constituted of a rod that is mainly made up from a fiber reinforced plastic and that is coated and joined with a coating layer which is adapted to support an optical fiber, said method comprising the steps of:
impregnating a bundle of fibers continuously introduced with a thermoset resin;
winding a belt having fine recesses and projections randomly and uniformly distributed thereon on a peripheral surface of said bundle of fibers that has been impregnated with said thermoset resin;
heating and thermally setting said bundle of fibers on which said belt has been wounded; and
stripping said belt from said peripheral surface of said bundle of fibers that has been thermally set, and
in which:
fine recesses and projections are caused to develop and distribute randomly and yet uniformly on an outer surface of said rod by continuously repeating the above mentioned steps.

15. A method of making a tension member for an optical fiber cable in which said tension member is constituted of a rod that is mainly made up from a fiber reinforced plastic and that is coated and joined with a coating layer which is adapted to support an optical fiber, said method comprising the steps of:
impregnating a bundle of fibers continuously introduced with a thermoset resin;
randomly and uniformly distributing on and attaching to a whole peripheral surface of said bundle of fibers that has been impregnated with said thermoset resin, a fine material that is soluble with said coating layer which is adapted to support said optical fiber; and
heating and thermally setting said thermally settable resin that has been impregnated into said bundle of fibers over said whole peripheral surface thereof to which said fine material has been attached, and
in which:
said fine material is caused to develop and distribute randomly and yet uniformly on said whole peripheral surface of said rod by continuously repeating the above mentioned steps.

16. A method of making a tension member for an optical fiber cable, as set forth in claim 15, characterized in that said fine material comprises a fibrous structural body that is constituted by an unwoven fabric, a woven fabric or the like and that is attached to said whole peripheral surface of said bundle of fibers.

17. A method of making a tension member for an optical fiber cable, as set forth in claim 16, characterized in that said fibrous structural body comprises a belt and said belt is wound on a said peripheral surface of said bundle of fibers.

18. A method of making a tension member for an optical fiber cable, as set forth in claim 15, characterized in that said fine material comprises a powdery pellet having a size of particles that is sufficient to develop said fine recesses and projections over said peripheral surface of said rod, and that said fine material is attached to said while peripheral surface of said bundle which has been impregnated with said thermoset resin.

19. A method of making a tension member for an optical fiber cable in which said tension member is constituted of a rod that is mainly made up from a fiber reinforced plastic and that is coated and joined with a coating layer which is adapted to support an optical fiber, said method comprising the steps of:
impregnating a bundle of fibers continuously introduced with a thermoset resin;
attaching a fibrous structural body onto a peripheral surface of said bundle of fibers that has been impregnated with said thermoset resin; and
heating and thermally setting said bundle of fibers to which said fibrous structural body has been attached, and
in which:
fine recesses and projections are caused to develop and distribute randomly and yet uniformly on said whole peripheral surface of said rod by continuously repeating the above mentioned steps.

20. A method of making a tension member for an optical fiber cable, as set forth in claim 19, characterized in that said fine recesses and projections comprise those of a surface of a fibrous structural body that is wound on said rod before it is formed by heating and that is exposed to the surface of said rod since while it is formed.

21. A method of making a tension member for an optical fiber cable, as set forth in claim 19, characterized in that said fibrous structural body comprises a belt which is wound onto said peripheral surface of said bundle of fibers which has been impregnated with said thermoset resin.

22. A method of making a tension member for an optical fiber cable in which said tension member is constituted of a rod that is mainly made up from a fiber reinforced plastic and that is coated and joined with a coating layer which is adapted to support an optical fiber, said method comprising the steps of:
impregnating a bundle of fibers continuously introduced with a thermoset resin;
heating and thermally setting said thermally settable resin which has been impregnated into said bundle of fibers;
coating a peripheral surface of said bundle of fibers which has been heated thermally set with a foamable resin;
foaming said coated foamable resin by heating it, and
in which:
fine recesses and projections are caused to develop and distribute randomly and yet uniformly on said whole peripheral surface of said rod by foaming said foamable resin.

23. A method of making a tension member for an optical fiber cable in which said tension member is constituted of a rod that is mainly made up from a fiber reinforced plastic and that is coated and joined with a coating layer which is adapted to support an optical fiber, said method comprising the steps of:
impregnating a bundle of fibers continuously introduced with a thermoset resin;
heating and thermally setting said thermally settable resin which has been impregnated into said bundle of fibers;
coating a peripheral surface of said bundle of fibers which has been thermally set further with a thermally settable resin;
heating and thermally setting said coated thermally settable resin which constitutes said coating layer; and
forming said thermally set resin with a fine recess and a fine projection by a mechanical means, and
in which:
fine recesses and projections are caused to develop and distribute randomly and yet uniformly on said whole peripheral surface of said rod by using said mechanical means.
